# EUROPÄISCHE PATENTSCHRIFT

(11) **EP 2 353 886 B1**
(45) Veröffentlichungstag und Bekanntmachung des Hinweises auf die Patenterteilung: **16.01.2013**
(21) Anmeldenummer: 10188296.7
(22) Anmeldetag: 21.10.2010
(51) Int. Cl.: B60C 11/12

(54) **Laufstreifenprofil eines Fahrzeugsreifens**
Run strip profile of a vehicle tyre
Profil de bande de roulement d'un pneu de véhicule

(30) Priorität: 13.01.2010 DE 102010000062
(43) Veröffentlichungstag der Anmeldung: 10.08.2011
(73) Patentinhaber: Continental Reifen Deutschland GmbH, 30165 Hannover (DE)
(72) Erfinder: Kendziorra, Norbert, 30827, Garbsen (DE); Müller, Norbert, 29336, Nienhagen (DE); Wagemann, Jürgen, 31162, Bad Salzdethfurth (DE)
(74) Vertreter: Finger, Karsten

(56) Entgegenhaltungen:
- JP-A- 6 316 204
- US-A- 3 023 798
- US-A- 5 647 926
- US-B1- 6 196 288

## Beschreibung

Die Erfindung betrifft ein Laufstreifenprofil eines Fahrzeugreifens -insbesondere eines Fahrzeugluftreifens - mit radial erhabenen Profilelementen, welche durch Profilrillen voneinander getrennt sind, wobei in der die Profilelemente nach radial außen begrenzenden, die Straßenkontaktfläche bildenden Oberfläche von einem oder mehreren Profilelementen ein oder mehrere Feineinschnitte ausgebildet sind, welche sich jeweils in der Oberfläche bis in eine das jeweilige Profilelement begrenzende Profilrille erstreckt und in diese mündet, wobei wenigstens ein Feineinschnitt ausgehend von der Profilrille wenigstens aus einem ersten, an die Profilrille anschließenden Erstreckungsabschnitt und aus einem zweiten, an den ersten Erstreckungsabschnitt sich anschließenden Erstreckungsabschnitt ausgebildet ist, wobei der Feineinschnitt im ersten Erstreckungsabschnitt mit einer in radialer Richtung R ausgehend von der Oberfläche nach radial innen bis zum Feineinschnittsgrund gemessenen Tiefe T₁, der in der Rillenwand der Profilrille einen minimalen Wert aufweist, und im zweiten Erstreckungsabschnitt mit einer in radialer Richtung R ausgehend von der Oberfläche nach radial innen bis zum Feineinschnittsgrund gemessenen Tiefe T₂ ausgebildet ist mit T₁<T₂ und mit T₁<P_{T}, wobei P_{T} die von der Oberfläche nach radial innen bis zum Rillengrund gemessene Profiltiefe der begrenzenden Profilrille bildet.

Derartige Laufstreifenprofile sind bekannt, beispielsweise aus der gattungsgemäßen US-5,647,926. Beispielsweise haben Winterreifen häufig eine Blockprofilausbildung, in der die Profilblockelemente mit zusätzlichen Feineinschnitten ausgebildet werden, die dem Profilblock eine erhöhte Beweglichkeit verleihen. Am Übergang der Feineinschnitte in die benachbarte Profilrille ist es bekannt, den Feineinschnitt mit einem erhöhten Feineinschnittsgrund auszubilden, so dass der Feineinschnitt an seinem Einmündungsbereich in die Profilrille nur mit einer gegenüber der Profilrillentiefe und gegenüber der im Haupterstreckungsverlauf des Feineinschnitts ausgebildeten Feineinschnitttiefe reduzierten Einschnitttiefe in das Profil einschneidet. Am Übergang zwischen Feineinschnitt und Profilrille kann der Feineinschnitt während des Abrollens gegenüber dem Erstreckungsabschnitt mit tiefer ausgebildetem Feineinschnittsgrund nur reduziert aufgeweitet und geöffnet werden. Die im Bereich der Einmündung zwischen Feineinschnitt und Profilrille wirkenden hohen Kräfte bei reduzierter Öffnungswirkung können zu Rissen im Feineinschnittsgrund führen. Bei vielen Reifen sind Laufstreifenprofile so ausgelegt, dass die an dieser Stelle entstehenden Risse die Haltbarkeit des Reifens nicht beeinträchtigen. Je nach Auslegung des Reifens können diese Risse jedoch auch die Haltbarkeit beeinträchtigen. Bei den Reifen, bei denen die Risse die Haltbarkeit nicht beeinträchtigen suggeriert zumindest der optische Eindruck eines Risses beim Betrachter den Eindruck eines vorhandenen Haltbarkeitsproblems.

Der Erfindung liegt daher die Aufgabe zugrunde, mit einfachen Mitteln bei derartigen Laufstreifenprofilen das Auftreten derartiger Risse zu erschweren.

Erfindungsgemäß gelöst wird die Aufgabe durch die Ausbildung eines Laufstreifenprofils eines Fahrzeugreifens -insbesondere eines Fahrzeugluftreifens - mit radial erhabenen Profilelementen, welche durch Profilrillen voneinander getrennt sind, wobei in der die Profilelemente nach radial außen begrenzenden , die Straßenkontaktfläche bildenden Oberfläche von einem oder mehreren Profilelementen ein oder mehrere Feineinschnitte ausgebildet sind, welche sich jeweils in der Oberfläche bis in eine das jeweilige Profilelement begrenzende Profilrille erstreckt und in diese mündet, wobei wenigstens ein Feineinschnitt ausgehend von der Profilrille wenigstens aus einem ersten, an die Profilrille anschließenden Erstreckungsabschnitt und aus einem zweiten, an den ersten Erstreckungsabschnitt sich anschließenden Erstreckungsabschnitt ausgebildet ist, wobei der Feineinschnitt im ersten Erstreckungsabschnitt mit einer in radialer Richtung R ausgehend von der Oberfläche nach radial innen bis zum Feineinschnittsgrund gemessenen Tiefe T₁, der in der Rillenwand der Profilrille einen minimalen Wert aufweist, und im zweiten Erstreckungsabschnitt mit einer in radialer Richtung R ausgehend von der Oberfläche nach radial innen bis zum Feineinschnittsgrund gemessenen Tiefe T₂ ausgebildet ist mit T₁<T₂ und mit T₁<P_{T}, wobei P_{T} die von der Oberfläche nach radial innen bis zum Rillengrund gemessene Profiltiefe der begrenzenden Profilrille bildet, gemäß den Merkmalen von Anspruch 1, bei dem in der Profilrille an der Mündungsstelle des Feineinschnitts in die Profilrille radial unterhalb des Feineinschnittsgrundes ein aus dem Rillengrund und aus der das Profilelemente begrenzenden Rillenwand in die Profilrille hineinragender Gummikörper ausgebildet ist, welcher sich in radialer Richtung R aus dem Rillengrund nach außen entlang der Rillenwand bis in seine maximale radiale Position erstreckt, die der radialen Position des Feineinschnittsgrundes in der Rillenwand entspricht.

Bei dieser Ausbildung bilden die Gummikörper eine gezielte Materialanhäufung in den Profilrillen an dem kritischen Übergangsbereich von Feineinschnitt zur Profilrille. Die Materialbelastung der beim Abrollvorgang beim Öffnen und Schließen des Feineinschnittes einwirkenden Kräfte wird auf ein größeres Materialvolumen verteilt und unter ein zur Rissbildung kritisches Niveau gedrückt. Die Gefahr der Rissbildung am Grunde des Feineinschnitts im Bereich der Einmündung in die Profilrille kann hierdurch sicher und einfach reduziert werden. Die Ausbildung ermöglicht darüber hinaus auch nachträglich bei Feststellung von derartigen Rissen in Reifenprofilen in einfacher Weise die bestehenden Reifenformen nachträglich mit einer entsprechenden Aussparung zu versehen und für die Folgeproduktion Rissbildung zu vermeiden. Bei Feststellung derartiger unerwarteter Rissbildungen bei Reifen lässt sich somit die Rissbildung in einfacher schneller Weise für die Folgeproduktion reduzieren.

Besonders vorteilhaft ist die Ausbildung eines Laufstreifenprofils gemäß den Merkmalen von Anspruch 2, wobei der Gummikörper ein Zylindersegment - insbesondere Kreiszylindersegment- ist, dessen Zylinderachse auf der von der Rillenwand zum Profilelement weisenden Seite angeordnet und mit ihrer Hauptrichtungskomponente in radialer Richtung R verlaufend ausgebildet ist. Bei Feststellung unerwarteter Rissbildungen bei Reifen lässt sich hierdurch in sehr einfacher Weise die Rissbildung für die Folgeproduktion reduzieren unter Verwendung einfacher Werkzeuge beispielsweise von Zylinderfräsen oder Bohrern zur Bearbeitung der bestehenden Reifenformen.

Besonders vorteilhaft ist die Ausbildung eines Laufstreifenprofils gemäß den Merkmalen von Anspruch 3, wobei der Gummikörper ein Ellipsoidsegment ist. Die Rissbildung kann hierdurch bei großen konstruktiven Freiheitsgraden in einfacher Weise reduziert werden bei Aufrechterhaltung eines großen für den Wasserabfluss aus der Rille und somit für gute Aquaplaningeigenschaften wichtigen Rillenquerschnitts.

Besonders vorteilhaft ist die Ausbildung eines Laufstreifenprofils gemäß den Merkmalen von Anspruch 4, wobei der Gummikörper ein Kugelsegment ist. Die Rissbildung kann hierdurch in einfacher Weise reduziert werden bei Aufrechterhaltung eines großen für den Wasserabfluss aus der Rille und somit für gute Aquaplaningeigenschaften wichtigen Rillenquerschnitts.

Besonders vorteilhaft ist die Ausbildung eines Laufstreifenprofils gemäß den Merkmalen von Anspruch 5, wobei der Gummiköper eine in Erstreckungsrichtung der Profilrille gemessene maximale Erstreckungsbreite D in der Rillenwand und eine senkrecht zur Erstreckungsrichtung der Profilrille und zur radialen Richtung R von der Rillenwand in die Profilrille hinein gemessene maximale Erstreckungslänge B aufweist mit D ≥B ≥ (0,5D). Dies ermöglicht eine optimierte Spannungsverteilung.

Besonders vorteilhaft ist die Ausbildung eines Laufstreifenprofils gemäß den Merkmalen von Anspruch 6, wobei der erste Erstreckungsbereich des Feineinschnitts mit einer in Haupterstreckungsrichtung des Feineinschnitts am Feineinschnittsgrund gemessenen Erstreckungslänge L₁ mit L₁≥ (0,5mm) ausgebildet ist.

Besonders vorteilhaft ist die Ausbildung eines Laufstreifenprofils gemäß den Merkmalen von Anspruch 7, wobei der zweite Erstreckungsbereich des Feineinschnitts mit einer in Haupterstreckungsrichtung des Feineinschnitts am Feineinschnittsgrund gemessenen Erstreckungslänge L₂ ausgebildet ist mit L₁<(2 L₂).

Besonders vorteilhaft ist die Ausbildung eines Laufstreifenprofils gemäß den Merkmalen von Anspruch 8, wobei der Feineinschnitt an seinem anderen Erstreckungsende ebenfalls in eine - insbesondere zweite - das Profilelement begrenzende Profilrille mündet, wobei der Feineinschnitt zusätzlich mit ausgehend von dieser Mündungsstelle mit einem weiteren ersten, an die Profilrille an der Mündungsstelle anschließenden Erstreckungsabschnitt ausgebildet ist und der zweite Erstreckungsabschnitt zwischen den beiden ersten Erstreckungsabschnitten ausgebildet ist.

Besonders vorteilhaft ist die Ausbildung eines Laufstreifenprofils gemäß den Merkmalen von Anspruch 9, wobei der Feineinschnitt in seinem ersten Erstreckungsabschnitt mit einer längs der Erstreckung des Feineinschnittes ausgehend von der Rillenwand der Profilrille stetig - insbesondere kontinuierlich - zunehmenden Tiefe T₁ und in seinem zweiten Erstreckungsabschnitt mit im wesentlichen konstanter Tiefe T₂ ausgebildet ist.

Die Erfindung wird im Folgenden an Hand der in den Figuren 1 bis 10 schematisch dargestellten Ausführungsbeispiele am Beispiel eines Winterreifenprofils für PKW-Reifen näher erläutert. Hierin zeigen
- Fig. 1: eine Draufsicht auf einen Abschnitt eines Laufstreifenprofils mit Profilblockelement, Umfangsrille und Gummikörper,
- Fig. 2: das Laufstreifenprofil von Fig. 1 in Schnittdarstellung gemäß Schnitt II-II von Fig.1,
- Fig. 3: den Ausschnitt des Laufstreifenprofils der Figuren 1 und 2 in perspektivischer Darstellung in Blickrichtung III-III von Fig.1,
- Fig. 4: einen Abschnitt eines Laufstreifenprofils in Draufsicht entsprechend der Darstellung von Fig. 1 mit alternativer Ausbildung der Gummikörper,
- Fig. 5: das Laufstreifenprofil von Fig.4 in Schnittdarstellung gemäß Schnitt V-V von Fig.4,
- Fig. 6: den Ausschnitt des Laufstreifenprofils der Figuren 4 und 5 in perspektivischer Darstellung in Blickrichtung V-V von Fig. 4,
- Fig. 7: einen Abschnitt eines Laufstreifenprofils in Draufsicht entsprechend der Darstellung von Fig. 1 mit weiterer alternativer Ausbildung der Gummikörper,
- Fig. 8: das Laufstreifenprofil von Fig.7 in Schnittdarstellung gemäß Schnitt VIII-VIII von Fig.7,
- Fig. 9: den Ausschnitt des Laufstreifenprofils der Figuren 7 und 8 in perspektivischer Darstellung in Blickrichtung IX-IX von Fig.7 und
- Fig.10: einen Ausschnitt eines Reifenformelementes zur Ausformung des Laufstreifenabschnitts von Fig.4 bis Fig.6.

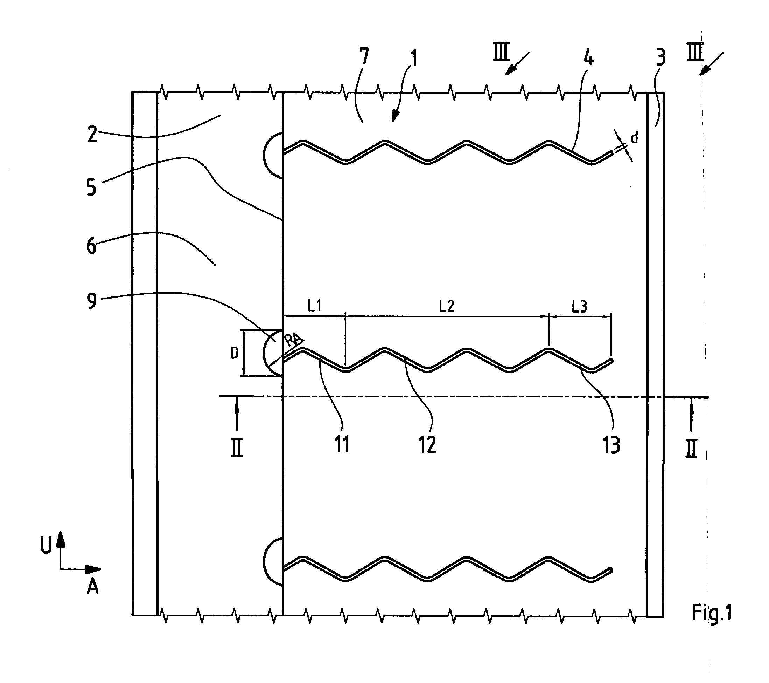

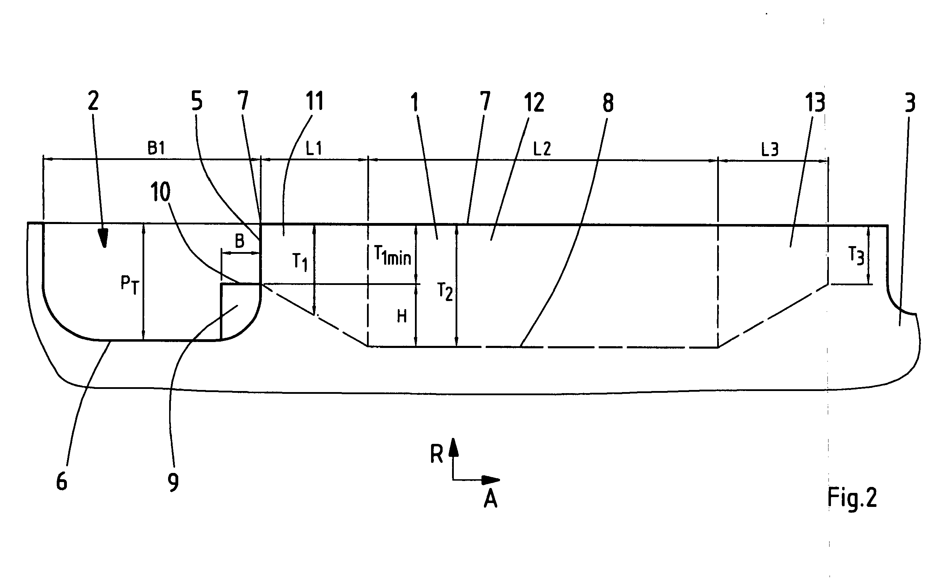

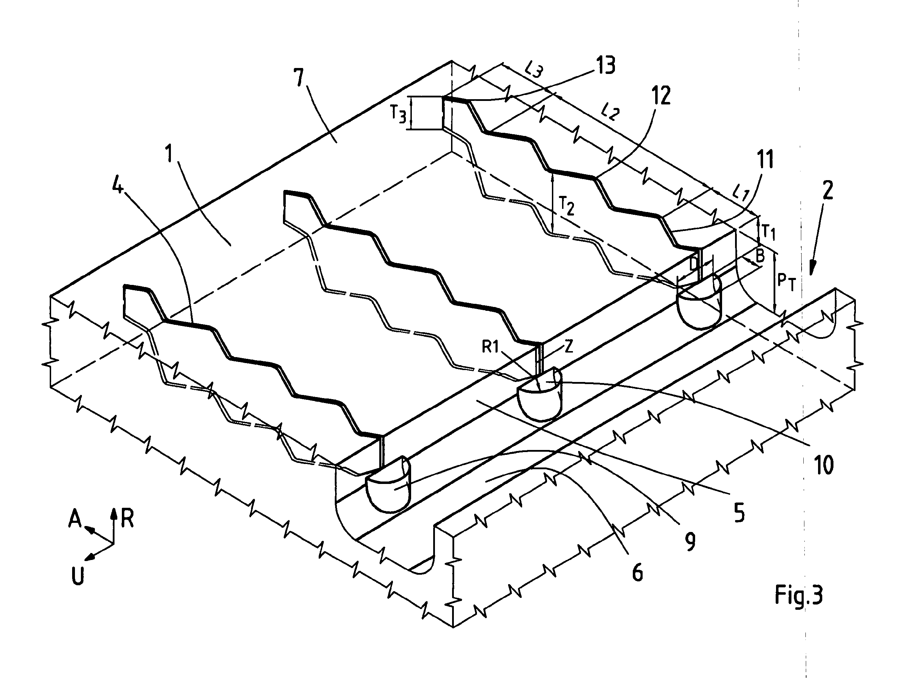

Die Figuren 1 bis 3 zeigen einen Ausschnitt eines Laufstreifenprofils mit zwei in Umfangsrichtung U des Fahrzeugluftreifens ausgerichteten und über den gesamten Umfang erstreckt ausgebildeten Umfangsrillen 2 und 3, welche einen über den Umfang des Fahrzeugluftreifens erstreckt ausgerichtete Profilblockreihe in axialer Richtung A zwischen sich einschließen und in axialer Richtung A jeweils zu einer Seite hin begrenzen. Die Profilblockreihe ist aus in Umfangsrichtung U hintereinander angeordneten und jeweils durch nicht dargestellte Querrillen voneinander getrennt ausgebildeten Profilblockelementen 1 ausgebildet. In den Profilblockelementen 1 sind jeweils in axiale Richtung A erstreckt verlaufende und in Umfangsrichtung U voneinander beabstandete Feineinschnitte 4 ausgebildet, welche sich von der das jeweilige Profilblockelement 1 nach radial außen begrenzenden radial äußeren Oberfläche 7 in radialer Richtung R nach innen bis zum Feineinschnittsgrund 8 hin erstrecken. Die Umfangsrille 2 wird in radialer Richtung R nach innen von ihrem über den gesamten Umfang des Fahrzeugluftreifens erstreckten Rillengrund 6 und zu den Profilblockelementen 7 hin von einer Rillenwand 5, die jeweils die zur Umfangsrille 2 hinweisende Flanke des Profilblockelementes 1 bildet, begrenzt. Die Umfangsrille 2 erstreckt sich in radialer Richtung R ausgehend von der die Straßenkontaktoberfläche bildenden Mantelfläche, welche durch die radial äußere Oberfläche 7 des Profilblockelementes 1 bestimmt wird, über die Profiltiefe P_{T} bis zum Rillengrund 6.

Der Feineinschnitt 4 erstreckt sich in axialer Richtung A zur Umfangsrille 2 hin bis zur Umfangsrille 2, in welcher er mündet. Ausgehend von der Rillenwand 5 der Umfangsrille 2 erstreckt sich der Feineinschnitt 4 zunächst über einen ersten axialen Erstreckungsabschnitt 11 der in axialer Richtung A gemessenen Erstreckungslänge L₁, einen sich anschließenden zweiten axialen Erstreckungsabschnitt 12 der in axialer Richtung A gemessenen Erstreckungslänge L₂ und einen dritten axialen Erstreckungsabschnitt 13 der in axialer Richtung A gemessenen Erstreckungslänge L₃. Im zweiten Erstreckungsabschnitt 12 ist der Feineinschnitt 4 mit einer in radialer Richtung R ausgehend von der das Profilblockelement 1 nach radial außen begrenzenden Oberfläche 7 nach radial innen bis zum Feineinschnittsgrund 8 gemessenen Tiefe T₂ mit längs des zweiten Erstreckungsabschnitt 12 konstant ausgebildeter Tiefe T₂ ausgebildet. Der Feineinschnitt 4 ist im ersten Erstreckungsabschnitt 11 mit einer in radialer Richtung R ausgehend von der das Profilblockelement 1 nach radial außen begrenzenden Oberfläche 7 nach radial innen bis zum Feineinschnittsgrund 8 gemessenen Tiefe T₁ ausgebildet, welche ihren minimalen Wert T₁ₘᵢₙ in der Rillenwand 5 aufweist und welche längs der Erstreckung des Feineinschnittes 4 über den gesamten ersten Erstreckungsabschnitt 11 hinweg stetig zunimmt bis zum Erreichen der Tiefe T₂, welche im Übergang zum zweiten Erstreckungsabschnitt 12 erreicht wird. Im dritten Erstreckungsabschnitt 13 ist der Feineinschnitt 4 mit einer in radialer Richtung R ausgehend von der das Profilblockelement 1 nach radial außen begrenzenden Oberfläche 7 nach radial innen bis zum Feineinschnittsgrund 8 gemessenen Tiefe T₃ ausgebildet, welche im Übergang vom zweiten Erstreckungsbereich den Wert T₂ als maximalen Wert einnimmt und welche mit zunehmender Erstreckung in axialer Richtung A weg von der Umfangsrille 2 bis zum Erstreckungsende des Feineinschnitts 4 stetig abnimmt.

Im dargestellten Ausführungsbeispiel nimmt die Tiefe T₁ des ersten Erstreckungsabschnitts ausgehend von der Rillenwand 5 bis zum zweiten Erstreckungsabschnitt kontinuierlich zu. Ebenso nimmt die Tiefe T₃ des dritten Erstreckungsabschnitts 13 über ihre Gesamterstreckung hinweg bis zum Ende des Feineinschnitts 4 kontinuierlich ab.

Für die Maße der minimalen Tiefe T_{1min,} welche im ersten Erstreckungsabschnitt 11 in der Rillenwand 5 erreicht wird, und die Tiefe T₂ gilt: T₁ₘᵢₙ < T₂ und T₁ₘᵢₙ < P_{T} .
Dabei ist T₁ₘᵢₙ= (T₂ - H), wobei H das Maß des radialen Abstandes des Rillengrundes 8 in der Rillenwand 5, d.h. an der Position mit minimaler Tiefe T₁ₘᵢₙ, von dem Rillengrund 8 im zweiten axialen Erstreckungsbereich 12 bildet.

Im dargestellten Ausführungsbeispiel ist P_{T} = 9mm, T₂ = 8mm, H = 3mm und somit T₁ = 5mm gewählt.

In der Umfangsrille 2 ist an der Umfangsposition der Mündungsstelle des Feineinschnittes 4 in die Umfangsrille 2 radial unterhalb des Feineinschnittgrundes 8 der Rillenwand 5 ein aus dem Rillengrund 6 und der Rillenwand 5 in die Profilrille 2 hineinragender Gummikörper 9 ausgebildet, welcher sich in radialer Richtung R aus dem Rillengrund 6 nach radial außen entlang der Rillenwand 5 bis in die radiale Position im Abstand T₁ₘᵢₙ von der radial äußeren das Profilblockelement 1 begrenzenden Oberfläche 7 erstreckt, wobei diese radiale Position die Position der maximalen radialen Erstreckung des Gummikörpers nach außen bildet.

Der Gummikörper 9 ist als ein Kreiszylindersegmentkörper mit der Zylinderachse Z und dem Radius R₁ ausgebildet, wobei die Zylinderachse Z in radialer Richtung R durch das Profilblockelement 1 erstreckt verläuft. Der kreiszylindrische Gummikörper 9 ist nach radial außen mit der Stirnfläche 10 des Zylinders begrenzt, welche parallel verlaufend zur der das Profilelement nach radial außen begrenzenden Oberfläche 7 ausgebildet ist. Der Rillengrund 8 des Feineinschnitts 4 geht somit in der Rillenwand 9 direkt in die Stirnfläche 10 über.

Der Gummikörper erstreckt sich in Erstreckungsrichtung senkrecht zu der Erstreckungsrichtung der Umfangsrille 2 und zur radialen Richtung R über eine maximale Erstreckungslänge B in die Umfangsrille 2 hinein. Der Gummikörper 9 ist mit einer in Erstreckungsrichtung der Umfangsrille 2 gemessenen maximalen Erstreckungsbreite D, die er in der Rillenwand 5 einnimmt, ausgebildet. Für die Maße B und D gilt: D ≥B≥0,5 x D) und B < 0,5B₁. B₁ gibt die maximale senkrecht zur Erstreckungsrichtung der Umfangsrille 2 gemessene Breite der Umfangsrille 2 in dem längs der Erstreckung der Umfangsrille 2 ausgebildeten Erstreckungsbereich des Gummikörpers 9 an.

Im dargestellten Ausführungsbeispiel ist der Feineinschnitt 4 mit einer Feineinschnittsbreite d mit d = 0,5mm ausgebildet.

Das Maß D ist so gewählt, dass 4mm ≥ D ≥ 1mm ist. Im dargestellten Ausführungsbeispiel ist D = 2mm und B = 0,9mm gewählt.

Die Erstreckungslänge L₁des ersten Erstreckungsabschnitts 11 ist mit L₁ ≥0,5mm und mit L₁< (2L₂) ausgebildet. Im konkret dargestellten Ausführungsbeispiel ist L₁ = 4mm, L₂ = 20mm und L₃ = 3mm ausgebildet.

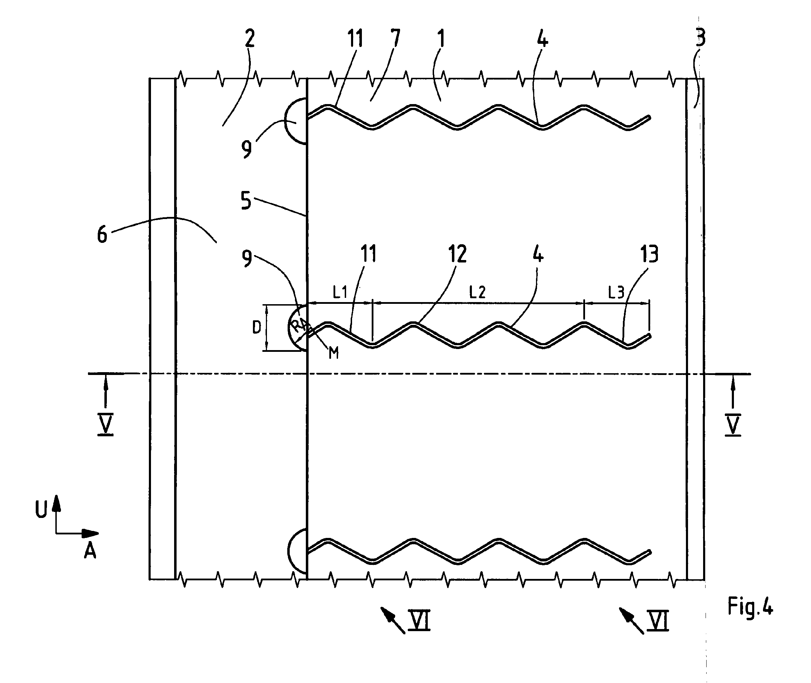

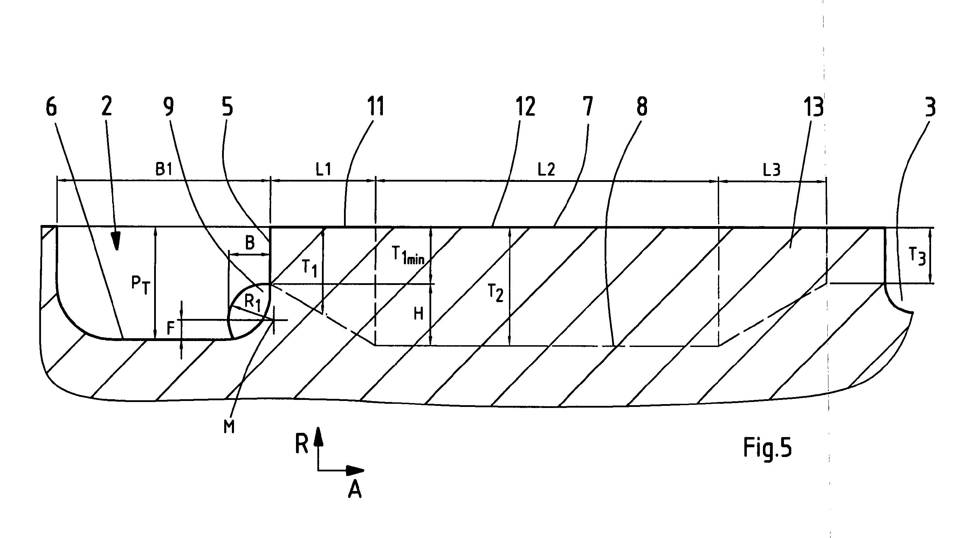

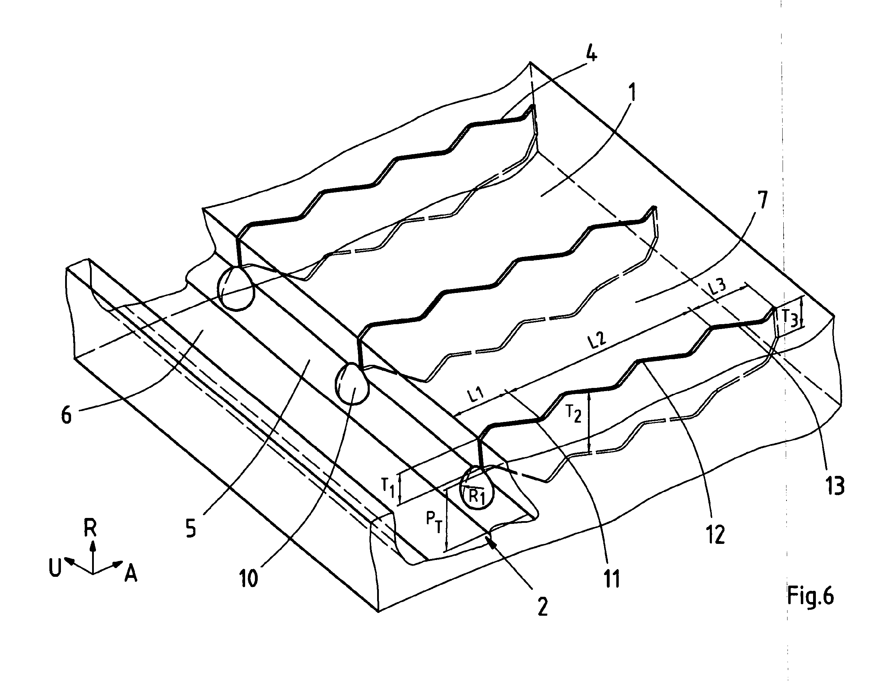

Die Figuren 4 bis 6 zeigen ein alternatives Ausführungsbeispiel, wobei der Gummikörper 9 jeweils als Kugelsegment einer Kugel mit Radius R₁ und mit radial außerhalb des Rillengrundes 6 mit in radialer Richtung R im Abstand F mit F < R₁ vom Rillengrund 6 im Profilblockelement 1 angeordnetem Mittelpunkt M ausgebildet ist. Auch bei dieser Ausführung erstreckt sich der Gummikörper 9 nach radial außen bis zu einer radialen Position im radialen Abstand T₁ von der radial äußeren das Profilblockelement 1 begrenzenden Oberfläche 7, wobei diese Position in der Rillenwand 8 in der Umfangsposition der Einmündung des Feineinschnittes 4 in die Umfangsrille 2 erreicht wird. Der Rillengrund 8 des Feineinschnitts 4 geht somit in der Rillenwand 9 direkt in die Kugeloberfläche über. Wie in den Ausführungen zu den Figuren 1 bis 3 dargestellt, erstreckt sich der Gummikörper 9 in Richtung senkrecht zur Erstreckungsrichtung der Umfangsrille 2 und senkrecht zur radialen Richtung R von der Rillenwand 5 über eine Erstreckungslänge B im Abstand von der Rillenwand 5 und in Erstreckungsrichtung der Umfangsrille 2 über eine maximales Erstreckungsmaß D, welches der Gummikörper 9 in der Rillenwand 5 aufweist.

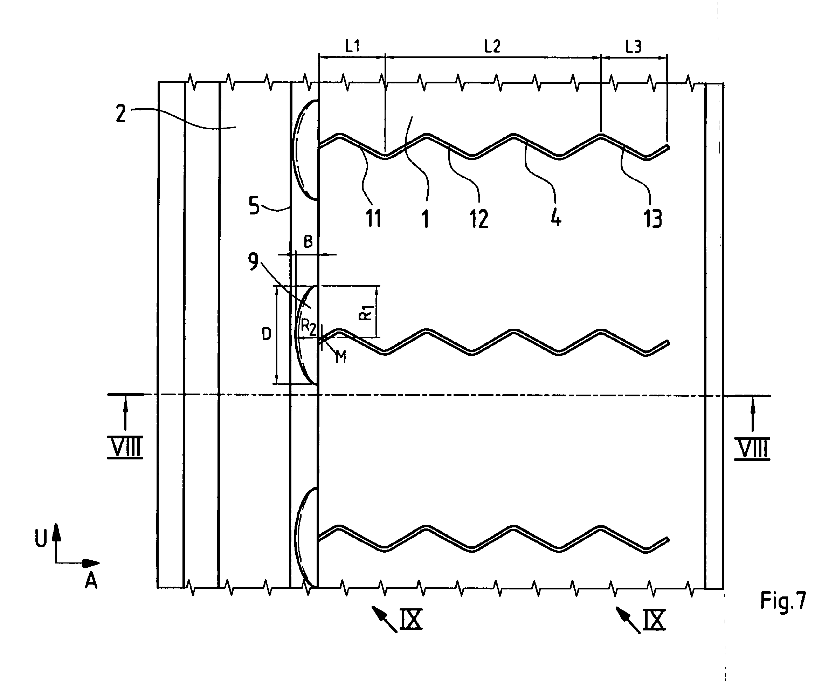

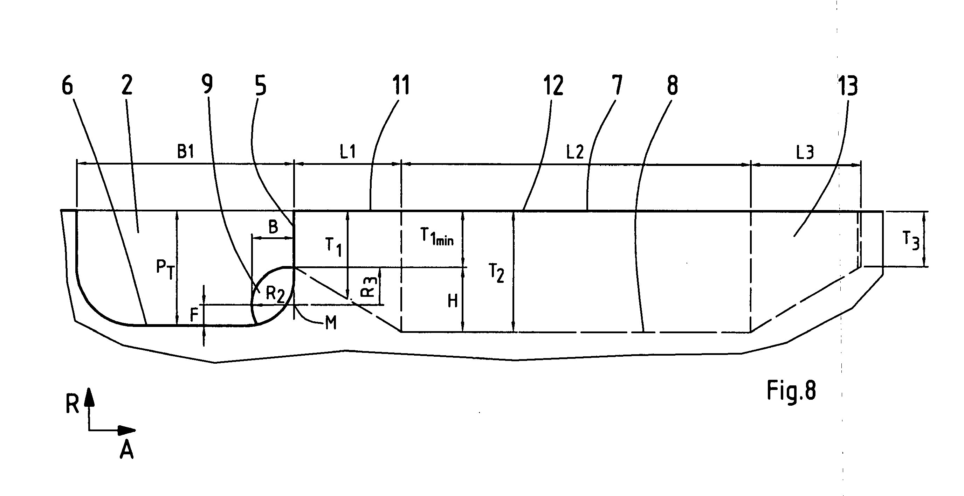

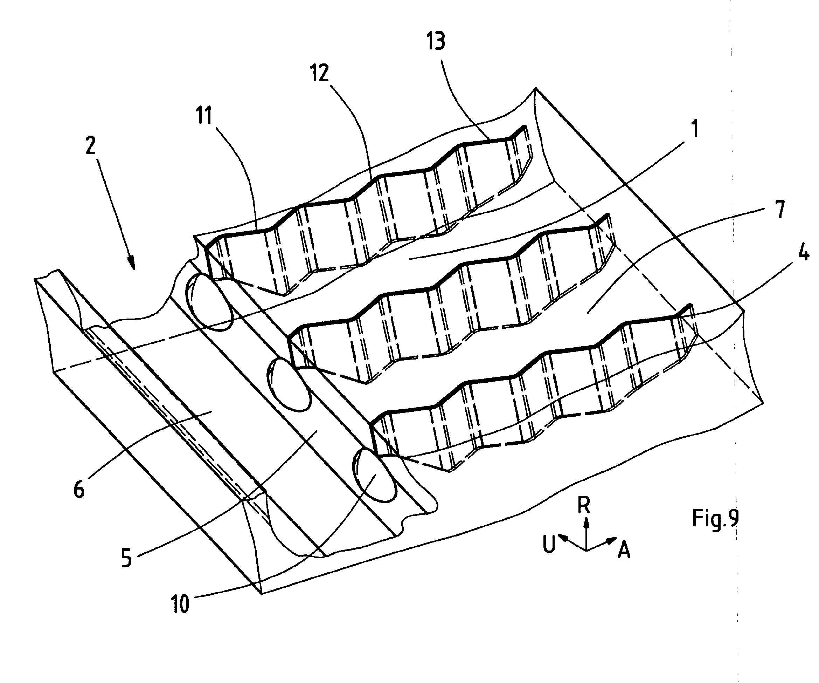

Die Figuren 7 bis 9 zeigen ein Ausführungsbeispiel, bei dem der Gummikörper 9 ein Segment eines Ellipsoides mit zentralem Mittelpunkt M und drei senkrecht aufeinander stehenden Haupterstreckungsachsen mit den Erstreckungsmaßen r₁, r₂ und r₃ der jeweiligen Halbachsen ausgebildet ist, wobei die Hauptachse mit der maximalen Erstreckungslänge r₁ parallel zur Rillenwand 5, die Hauptachse mit dem kleinsten Erstreckungsmaß r₂ senkrecht zur Rillenwand 5 und die Hauptachse mit dem mittleren Erstreckungsmaß r₃ in radialer Richtung R verlaufend ausgebildet ist. Wie in Fig. 8 zu erkennen ist, ist der Mittelpunkt M im Profilblockelement 1 radial außerhalb des Rillengrundes 6 mit in radialer Richtung R gemessenen Abstand F zum Rillengrund 6 ausgebildet.

Auch in diesem Ausführungsbeispiel erstreckt sich der Gummikörper 9 in der Umfangsrille 2 in radialer Richtung R nach außen bis in einen Abstand T₁ von der das Profilblockelement 1 nach radial außen begrenzenden Oberfläche 7, welche er in der Rillenwand 5 in der Umfangsposition der Einmündung des Feineinschnitts 4 in die Umfangsrille 2 einnimmt, so dass der Feineinschnittsgrund 8 in der Rillenwand 5 direkt in die Oberfläche des Ellipsoiden übergeht. Der Gummikörper 9 erstreckt sich auch - wie in Fig. 7 und 8 zu erkennen ist - senkrecht zur Erstreckungsrichtung der Umfangsrille 2 und zur radialen Richtung R bis in einen maximalen Abstand B von der Rillenwand 5 in die Umfangsrille 2 hinein und in Erstreckungsrichtung der Umfangsrille 2 über ein maximales Erstreckungsmaß D, welches der Gummikörper 9 - wie in Fig. 7 zu erkennen ist - in der Rillenwand 5 einnimmt.

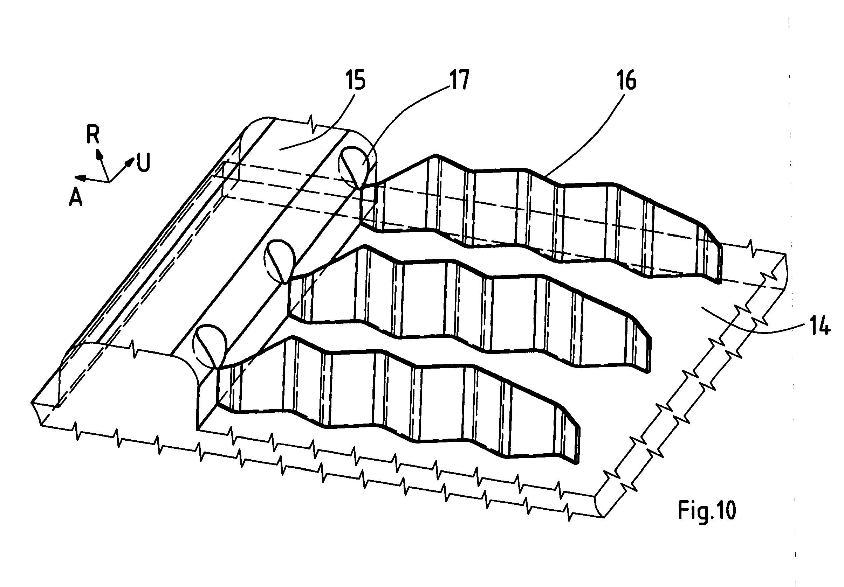

In Fig. 10 ist ein Formsegment 14 einer Vulkanisierform dargestellt, mit der der Laufflächenabschnitt profiliert wird, wobei Fig. 10 ein Ausführungsbeispiel darstellt zur Erzeugung eines Laufflächenabschnitts, welcher einen kugelförmigen Gummikörper 9 - entsprechend der in den Figuren 4 bis 6 dargestellten Ausführungsform - erzeugt. Das Formsegment 14 ist mit einer Rippe 15 zur Ausformung der Umfangsrille 2, mit Lamellenblechen 16 zur Ausformung der Feineinschnitte 4 und mit dem einem Negativ eines Kugelsegmentes entsprechend augeformten Ausnehmungen 17 ausgebildet. Die Ausnehmungen 17 sind jeweils in der Rippe 15 oberhalb der Einmündung eines Lamellenbleches 16 in die Rippe 15 ausgebildet und erstrecken sich bis zum jeweiligen Lamellenblech 16. Wie der Fig. 10 zu entnehmen ist, sind die Ausnehmungen 17 leicht zugänglich positioniert und können sowohl bei der Herstellung der Rippe 15 gießtechnisch oder auch durch spanende Verfahren erzeugt werden. Die Ausnehmungen 17 können auch nachträglich an derartige noch ohne Ausnehmungen 17 ausgebildete Formsegmente 14 beispielsweise durch Fräsen eingebracht werden.

In den dargestellten Ausführungsbeispielen sind die Feineinschnitte 4 jeweils ausgehend von der Umfangsrille 2 über den ersten Erstreckungsabschnitt 11, den zweiten Erstreckungsabschnitt 12 und den dritten Erstreckungsabschnitt 13 ausgebildet und enden dann im Profilblockelement 1 im Abstand zu der Umfangsrille 3.

In anderer, nicht dargestellter Ausführung sind die Feineinschnitte 4 ausgehend von der Umfangsrille 2 durch das Profilblockelement 1 hindurch erstreckt und münden zusätzlich in der Umfangsrille 3. Bei dieser Ausführung ist der Feineinschnitt 4 nicht mit einem dritten Erstreckungsabschnitt 13, sondern mit einem analog zum ersten Erstreckungsabschnitt 11, der in die Umfangsrille 15 mündet, ausgebildeten weiteren ersten Erstreckungsabschnitt 11, welcher in die Umfangsrille 3 mündet, ausgebildet. In diesem Ausführungsbeispiel sind analog zu den in der Umfangsrille 2 ausgebildeten Gummikörpern 9 auch in der Umfangsrille 3 Gummikörper 9 im Bereich der Einmündung der Feineinschnitte 4 nach einer der oben genannten Ausführungsformen ausgebildet.

Die Feineinschnitte 4 sind in den dargestellten Ausführungsformen längs ihrer Erstreckungsrichtung in axialer Richtung A des Reifens wellenförmig verlaufend ausgebildet.

In anderer, nicht dargestellter Ausführung sind die Feineinschnitte 4 geradlinig verlaufend ausgebildet.

In anderer, nicht dargestellter Ausführungsform sind die Feineinschnitte 4 auch mit einer längs ihrer Erstreckungsrichtung in radialer Richtung R mit einem konturierten Verlauf - beispielsweise mit einem wellenförmigen oder zick-zack-förmigen - Verlauf bekannter Art ausgebildet.

### Bezugszeichenliste

### (Teil der Beschreibung)

- 1: Profilblockelement
- 2: Umfangsrille
- 3: Umfangsrille
- 4: Feineinschnitt
- 5: Rillenwand
- 6: Rillengrund
- 7: Radial äußere Oberfläche
- 8: Feineinschnittsgrund
- 9: Gummikörper
- 10: Zylinderstirnfläche
- 11: erster Erstreckungsabschnitt
- 12: zweiter Erstreckungsabschnitt
- 13: dritter Erstreckungsabschnitt
- 14: Formsegment
- 15: Rippe
- 16: Lamellenblech
- 17: Ausnehmung

## Patentansprüche

1. Laufstreifenprofil eines Fahrzeugreifens -insbesondere eines Fahrzeugluftreifens -
mit radial erhabenen Profilelementen (1), welche durch Profilrillen (2,3) voneinander getrennt sind, wobei in der die Profilelemente (1) nach radial außen
begrenzenden, die StraLienkontaktfläche bildenden Oberfläche (7) von einem oder mehreren Profilelementen (1) ein oder mehrere Feineinschnitte (4) ausgebildet sind, welche sich jeweils in der Oberfläche (7) bis in eine das jeweilige Profilelement (1) begrenzende Profilrille (2) erstreckt und in diese mündet,
wobei wenigstens ein Feineinschnitt (4) ausgehend von der Profilrille (2) wenigstens aus einem ersten, an die Profilrille (2) anschließenden Erstreckungsabschnitt (11) und aus einem zweiten, an den ersten Erstreckungsabschnitt (11) sich anschließenden Erstreckungsabschnitt (12) ausgebildet ist,
wobei der Feineinschnitt (4) im ersten Erstreckungsabschnitt (11) mit einer in radialer Richtung R ausgehend von der Oberfläche (7) nach radial innen bis zum Feineinschnittsgrund (8) gemessenen Tiefe T₁, der in der Rillenwand (5) der Profilrille (2) einen minimalen Wert aufweist, und im zweiten Erstreckungsabschnitt (12) mit einer in radialer Richtung R ausgehend von der Oberfläche (7) nach radial innen bis zum Feineinschnittsgrund (8) gemessenen Tiefe T₂ ausgebildet ist mit T₁<T₂ und mit T₁<P_{T}, wobei P_{T} die von der Oberfläche (7) nach radial innen bis zum Rillengrund (6) gemessene Profiltiefe der begrenzenden Profilrille (2) bildet,
**dadurch gekennzeichnet,**
**dass** in der Profilrille (2) an der Mündungsstelle des Feineinschnitts (4) in die Profilrille (2) radial unterhalb des Feineinschnittsgrundes (8) ein aus dem Rillengrund (6) und aus der das Profilelement (1) begrenzenden Rillenwand (5) in die Profilrille (2) hineinragender Gummikörper (9) ausgebildet ist, welcher sich in radialer Richtung R aus dem Rillengrund (6) nach außen entlang der Rillenwand (5) bis in seine maximale radiale Position erstreckt, die der radialen Position des Feineinschnittsgrundes (8) in der Rillenwand (5) entspricht.

2. Laufstreifenprofil gemäß den Merkmalen von Anspruch 1,
wobei der Gummikörper (9) ein Zylindersegment - insbesondere Kreiszylindersegment- ist, dessen Zylinderachse z auf der von der Rillenwand (5) zum Profilelement (1) weisenden Seite angeordnet und mit ihrer Hauptrichtungskomponente in radialer Richtung R verlaufend ausgebildet ist.

3. Laufstreifenprofil gemäß den Merkmalen von Anspruch 1,
wobei der Gummikörper (9) ein Ellipsoidsegment ist.

4. Laufstreifenprofil gemäß den Merkmalen von Anspruch 1,
wobei der Gummikörper (9) ein Kugelsegment ist.

5. Laufstreifenprofil gemäß den Merkmalen von einem der vorangegangenen Ansprüche,
wobei der Gummiköper (9) eine in Erstreckungsrichtung der Profilrille (2) gemessene maximale Erstreckungsbreite D in der Rillenwand (5) und eine senkrecht zur Erstreckungsrichtung der Profilrille (2) und zur radialen Richtung R von der Rillenwand (5) in die Profilrille (2) hinein gemessene maximale Erstreckungslänge B aufweist mit D ≥ B ≥ (0,5D).

6. Laufstreifenprofil gemäß den Merkmalen von einem der vorangegangenen Ansprüche,
wobei der erste Erstreckungsbereich (11) des Feineinschnitts (4) mit einer in Haupterstreckungsrichtung des Feineinschnitts (4) am Feineinschnittsgrund (8) gemessenen Erstreckungslänge L₁ mit L₁≥ (0,5mm) ausgebildet ist.

7. Laufstreifenprofil gemäß den Merkmalen von Anspruch 6,
wobei der zweite Erstreckungsbereich (12) des Feineinschnitts (4) mit einer in Haupterstreckungsrichtung des Feineinschnitts (4) am Feineinschnittsgrund (8) gemessenen Erstreckungslänge L₂ ausgebildet ist mit L₁<(2 L₂).

8. Laufstreifenprofil gemäß den Merkmalen von einem der vorangegangenen Ansprüche,
wobei der Feineinschnitt (4) an seinem anderen Erstreckungsende ebenfalls in eine - insbesondere zweite - das Profilelement (1) begrenzende Profilrille (3) mündet, wobei der Feineinschnitt (4) zusätzlich mit ausgehend von dieser Mündungsstelle mit einem weiteren ersten, an die Profilrille (3) an der Mündungsstelle anschließenden Erstreckungsabschnitt (11) ausgebildet ist und der zweite Erstreckungsabschnitt (12) zwischen den beiden ersten Erstreckungsabschnitten (11) ausgebildet ist.

9. Laufstreifenprofil gemäß den Merkmalen von einem der vorangegangenen Ansprüche,
wobei der Feineinschnitt (4) in seinem ersten Erstreckungsabschnitt (11) mit einer längs der Erstreckung des Feineinschnittes (4) ausgehend von der Rillenwand (5) der Profilrille (2) stetig - insbesondere kontinuierlich - zunehmenden Tiefe T₁ und in seinem zweiten Erstreckungsabschnitt (12) mit im wesentlichen konstanter Tiefe T₂ ausgebildet ist.

## Claims

1. Tread profile of a vehicle tyre - in particular a pneumatic vehicle tyre - with radially raised profile elements (1), which are separated from one another by profile grooves (2, 3), wherein in the surface (7) of one or more profile elements (1) that delimits the profile elements (1) radially outwards and forms the road contact surface there are formed one or more sipes (4), which respectively extend in the surface (7) into a profile groove (2) delimiting the respective profile element (1) and open out into this groove, wherein, starting from the profile groove (2), at least one sipe (4) is formed at least by a first portion of extent (11), adjoining the profile groove (2), and a second portion of extent (12), adjoining the first portion of extent (11),
wherein the sipe (4) is formed in the first portion of extent (11) with a depth T₁, which is measured in the radial direction R from the surface (7) radially inwards to the sipe base (8) and has a minimum value in the groove wall (5) of the profile groove (2), and is formed in the second portion of extent (12) with a depth T₂, which is measured in the radial direction R from the surface (7) radially inwards to the sipe base (8), where T₁ < T₂ and where T₁ < P_{T}, where P_{T} forms the profile depth of the delimiting profile groove (2), measured from the surface (7) radially inwards to the groove base (6),
**characterized**
**in that** in the profile groove (2), at the opening point of the sipe (4) into the profile groove (2), there is formed radially below the sipe base (8) a rubber body (9), which protrudes from the groove base (6) and the groove wall (5) delimiting the profile element (1) into the profile groove (2) and extends in the radial direction R outwards from the groove base (6) along the groove wall (5) to its maximum radial position, which corresponds to the radial position of the sipe base (8) in the groove wall (5).

2. Tread profile according to the features of Claim 1, wherein the rubber body (9) is a segment of a cylinder - in particular a segment of a circular cylinder -, the cylinder axis z of which is arranged on the side facing from the groove wall (5) to the profile element (1) and is formed such that it runs with its principal directional component in the radial direction R.

3. Tread profile according to the features of Claim 1, wherein the rubber body (9) is a segment of an ellipsoid.

4. Tread profile according to the features of Claim 1, wherein the rubber body (9) is a segment of a sphere.

5. Tread profile according to the features of one of the preceding claims,
wherein the rubber body (9) has a maximum width of extent D, measured in the direction of extent of the profile groove (2), in the groove wall (5) and a maximum length of extent B, measured perpendicularly to the direction of extent of the profile groove (2) and to the radial direction R from the groove wall (5) into the profile groove (2), where D ≥ B ≥ (0.5 D).

6. Tread profile according to the features of one of the preceding claims,
wherein the first region of extent (11) of the sipe (4) is formed with a length of extent L₁, measured in the principal direction of extent of the sipe (4) on the sipe base (8), where L₁ ≥ (0.5 mm).

7. Tread profile according to the features of Claim 6, wherein the second region of extent (12) of the sipe (4) is formed with a length of extent L₂, measured in the principal direction of extent of the sipe (4) on the sipe base (8), where L₁ < (2 L₂).

8. Tread profile according to the features of one of the preceding claims,
wherein the sipe (4) likewise opens out at the other end of its extent into a profile groove (3) - in particular a second profile groove (3) - delimiting the profile element (1),
wherein the sipe (4) is additionally formed with, extending from this opening point, a further first portion of extent (11), adjoining the profile groove (3) at the opening point, and the second portion of extent (12) is formed between the two first portions of extent (11).

9. Tread profile according to the features of one of the preceding claims,
wherein the sipe (4) is formed in its first portion of extent (11) with a depth T₁ increasing steadily - in particular continuously - along the extent of the sipe (4) from the groove wall (5) of the profile groove (2) and is formed in its second portion of extent (12) with a substantially constant depth T₂.

## Revendications

1. Profil de bande de roulement d'un bandage de véhicule - en particulier d'un pneumatique de véhicule - comprenant des éléments profilés rehaussés radialement (1), qui sont séparés les uns des autres par des gorges profilées (2, 3), une ou plusieurs entailles fines (4) étant réalisées dans la surface (7) d'un ou de plusieurs éléments profilés (1), formant la surface de contact avec la route, limitant radialement vers l'extérieur les éléments profilés (1), lesquelles entailles fines s'étendent à chaque fois dans la surface (7) jusque dans une rainure profilée (2) limitant l'élément profilé respectif (1) et débouchent dans celle-ci,
au moins une entaille fine (4) partant de la rainure profilée (2) étant réalisée au moins à partir d'une première portion d'étendue (11) se raccordant à la rainure profilée (2) et à partir d'une deuxième portion d'étendue (12) se raccordant à la première portion d'étendue (11), l'entaille fine (4) étant réalisée dans la première portion d'étendue (11) avec une profondeur T₁ mesurée dans la direction radiale R à partir de la surface (7) radialement vers l'intérieur jusqu'à la base de l'entaille fine (8), qui présente, dans la paroi de gorge (5) de la gorge profilée (2) une valeur minimale, et dans la deuxième portion d'étendue (12) avec une profondeur T₂ mesurée dans la direction radiale R à partir de la surface (7) radialement vers l'intérieur jusqu'à la base de l'entaille fine (8), avec T₁ < T₂ et avec T₁ < P_{T}, P_{T} formant la profondeur de profilé de la gorge profilée (2) de limitation mesurée depuis la surface (7) radialement vers l'intérieur jusqu'à la base de gorge (6),
**caractérisé en ce que**
dans la gorge profilée (2) au niveau de la zone d'embouchure de l'entaille fine (4) dans la gorge profilée (2) radialement sous la base d'entaille fine (8) est réalisé un corps en caoutchouc (9) pénétrant dans la gorge profilée (2) depuis la base de gorge (6) et depuis la paroi de gorge (5) limitant l'élément profilé (1), lequel corps en caoutchouc (9) s'étend dans la direction radiale R hors de la base de gorge (6) vers l'extérieur le long de la paroi de gorge (5) jusque dans sa position radiale maximale, qui correspond à la position radiale de la base d'entaille fine (8) dans la paroi de gorge (5).

2. Profil de bande de roulement selon les caractéristiques de la revendication 1,
dans lequel le corps en caoutchouc (9) est un segment cylindrique - notamment un segment cylindrique circulaire - dont l'axe de cylindre z est disposé sur le côté tourné depuis la paroi de gorge (5) vers l'élément profilé (1), et est réalisé de manière à s'étendre avec sa composante de direction principale dans la direction radiale R.

3. Profil de bande de roulement selon les caractéristiques de la revendication 1,
dans lequel le corps en caoutchouc (9) est un segment d'ellipsoïde.

4. Profil de bande de roulement selon les caractéristiques de la revendication 1,
dans lequel le corps en caoutchouc (9) est un segment de sphère.

5. Profil de bande de roulement selon les caractéristiques de l'une quelconque des revendications précédentes,
dans lequel le corps en caoutchouc (9) présente une largeur d'étendue maximale D mesurée dans la direction d'étendue de la gorge profilée (2) dans la paroi de gorge (5) et une longueur d'étendue maximale B mesurée perpendiculairement à la direction d'étendue de la gorge profilée (2) et vers la direction radiale R depuis la paroi de gorge (5) dans la gorge profilée (2), avec D ≥ B ≥ (0,5 D).

6. Profil de bande de roulement selon les caractéristiques de l'une quelconque des revendications précédentes,
dans lequel la première région d'étendue (11) de l'entaille fine (4) est réalisée avec une longueur d'étendue L₁ mesurée dans la direction d'étendue principale de l'entaille fine (4) au niveau de la base d'entaille fine (8), avec L₁ ≥ (0,5 mm).

7. Profil de bande de roulement selon les caractéristiques de la revendication 6,
dans lequel la deuxième région d'étendue (12) de l'entaille fine (4) est réalisée avec une longueur d'étendue L₂ mesurée dans la direction d'étendue principale de l'entaille fine (4) au niveau de la base d'entaille fine (8), avec L₁ < (2 L₂).

8. Profil de bande de roulement selon les caractéristiques de l'une quelconque des revendications précédentes,
dans lequel l'entaille fine (4) débouche au niveau de son autre extrémité d'étendue également dans une gorge profilée (3) - notamment une deuxième gorge profilée - limitant l'élément profilé (1), l'entaille fine (4) étant réalisée en outre avec une autre première portion d'étendue (11) se raccordant, à partir de la zone d'embouchure, à la gorge profilée (3) au niveau de cette zone d'embouchure, et la deuxième portion d'étendue (12) étant réalisée entre les deux premières portions d'étendue (11).

9. Profil de bande de roulement selon les caractéristiques de l'une quelconque des revendications précédentes,
dans lequel l'entaille fine (4) est réalisée dans sa première portion d'étendue (11) avec une profondeur T₁ croissant de manière constante - essentiellement en continu - le long de l'étendue de l'entaille fine (4) à partir de la paroi de gorge (5) de la gorge profilée (2) et une profondeur T₂ essentiellement constante dans sa deuxième portion d'étendue (12).
